(19) **Europäisches Patentamt / European Patent Office / Office européen des brevets**

(11) **EP 4 582 969 A1**

(12) **EUROPEAN PATENT APPLICATION**
published in accordance with Art. 153(4) EPC

(43) Date of publication:
**09.07.2025 Bulletin 2025/28**

(21) Application number: **23876286.8**

(22) Date of filing: **14.07.2023**

(51) International Patent Classification (IPC):
*G06F 16/2453* (2019.01)

(52) Cooperative Patent Classification (CPC):
**G06F 16/2453; G06F 16/2455**

(86) International application number:
**PCT/CN2023/107575**

(87) International publication number:
**WO 2024/078080 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.10.2022 CN 202211262184**

(71) Applicant: **Huawei Technologies Co., Ltd.
Shenzhen, Guangdong 518129 (CN)**

(72) Inventors:
• **ZHOU, Zhaoqi
Shenzhen, Guangdong 518129 (CN)**
• **ZHANG, Shujie
Shenzhen, Guangdong 518129 (CN)**
• **WANG, Zhenzhen
Shenzhen, Guangdong 518129 (CN)**

(74) Representative: **Gill Jennings & Every LLP
The Broadgate Tower
20 Primrose Street
London EC2A 2ES (GB)**

(54) **DATABASE QUERY METHOD AND APPARATUS, AND DEVICE AND MEDIUM**

(57)    This application provides a database query method and apparatus, a device, and a medium. The method includes: determining, in response to a query statement, an operator required for executing the query statement, where the query statement indicates to obtain to-be-queried data in a database, and the query statement is a statement that needs to be executed in a parallel query manner; obtaining available resource information of the operator and a first degree of parallelism of the operator, where the first degree of parallelism represents a degree of parallelism that can be currently used when the operator is executed; and obtaining a second degree of parallelism of the operator based on the available resource information of the operator and the first degree of parallelism of the operator, where the second degree of parallelism represents a degree of parallelism used when the operator is actually executed; and executing the operator based on the second degree of parallelism of the operator, to obtain and return the to-be-queried data. Further, the degree of parallelism corresponding to the operator is adaptively adjusted based on the available resource information of the operator, and this helps improve resource utilization efficiency and database performance.

```
Determine, in response to a query statement, an operator required for
executing the query statement, where the query statement indicates to obtain
to-be-queried data in a database, and the query statement is a statement that
needs to be executed in a parallel query manner                                S201

Obtain available resource information of the operator                          S202

Obtain a first degree of parallelism of the operator, where the first degree of
parallelism represents a degree of parallelism that can be currently used when
the operator is executed                                                       S203

Obtain a second degree of parallelism of the operator based on the available
resource information of the operator and the first degree of parallelism of the
operator, where the second degree of parallelism represents a degree of
parallelism used when the operator is actually executed                        S204

Execute the operator based on the second degree of parallelism of the
operator, to obtain and return the to-be-queried data                          S205
```

FIG. 2

Processed by Luminess, 75001 PARIS (FR)

## Description

This application claims priority to Chinese Patent Application No. 202211262184.X, filed with the China National Intellectual Property Administration on October 14, 2022 and entitled "DATABASE QUERY METHOD AND APPARATUS, DEVICE, AND MEDIUM", which is incorporated herein by reference in its entirety.

## TECHNICAL FIELD

This application relates to the database field, and more specifically, to a database query method and apparatus, a device, and a medium.

## BACKGROUND

When a query is performed based on a database, a query statement needs to be executed based on an operator, to obtain to-be-queried data. Operators may be executed in parallel in a multi-process or multi-thread manner, and a degree of parallelism of the operator needs to be determined. The degree of parallelism refers to a quantity of processes or threads required in a process of performing parallel query based on the database. The operator is executed based on the degree of parallelism of the operator, to obtain data corresponding to the query statement.

A method for determining a degree of parallelism of an operator and executing the operator and a query statement based on the degree of parallelism of the operator is required to effectively utilize a resource and improve resource utilization.

## SUMMARY

An objective of this application is to provide a database query method and apparatus, a device, and a medium, to resolve a problem that database performance is affected because system resource utilization is low during database query in the conventional technology.

According to a first aspect, this application discloses a database query method, including:

determining, in response to a query statement, an operator required for executing the query statement, where the query statement indicates to obtain to-be-queried data in a database, and the query statement is a statement that needs to be executed in a parallel query manner;

obtaining available resource information of the operator and a first degree of parallelism of the operator, where the first degree of parallelism represents a degree of parallelism that can be currently used when the operator is executed; and obtaining a second degree of parallelism of the operator based on the available resource information of the operator and the first degree of parallelism of the operator, where the second degree of parallelism represents a degree of parallelism used when the operator is actually executed; and

executing the operator based on the second degree of parallelism of the operator, to obtain and return the to-be-queried data.

In the foregoing manner, the degree of parallelism corresponding to the operator is adaptively adjusted based on the available resource information corresponding to the operator, so that when the operator is executed, the available resource information can be fully used, and resource utilization efficiency and database performance are improved.

In a possible design, the obtaining a second degree of parallelism of the operator based on the available resource information of the operator and the first degree of parallelism of the operator includes:

invoking a preset model if it is determined that the first degree of parallelism of the operator is greater than a preset threshold, and determining the second degree of parallelism of the operator based on the available resource information of the operator, the first degree of parallelism, and the preset model, where the preset model indicates a correspondence among the available resource information, the first degree of parallelism, and the second degree of parallelism.

In the foregoing manner, when the second degree of parallelism is determined based on the available resource information of the operator and the first degree of parallelism, if it is determined that the first degree of parallelism is greater than the preset threshold, the second degree of parallelism may be directly determined based on the preset model, the available resource information, and the first degree of parallelism. Then, according to the foregoing method, when the first degree of parallelism is greater than the preset threshold, the second degree of parallelism may be adaptively determined based on the available resource information of the operator and the preset model, so that when the operator is executed, the available resource information can be fully used, and resource utilization efficiency and database performance are improved.

In a possible design, the correspondence indicated by the preset model meets the following conditions: the available resource information is in negative correlation with a difference result, and the second degree of parallelism is greater than the preset threshold, where the difference result indicates a difference between the first degree of parallelism and the second degree of parallelism.

In the foregoing manner, when the correspondence represented by the preset model meets the foregoing conditions, the second degree of parallelism may be obtained based on the available resource information of the operator and the first degree of parallelism. In the foregoing manner of determining the second degree of parallelism, resource information can be fully used, and resource information utilization and database performance are improved.

In a possible design, the method further includes:
determining the preset threshold as the second degree of parallelism of the operator if it is determined that the first degree of parallelism is less than or equal to the preset threshold.

In the foregoing manner, operator execution efficiency, system resource utilization, and database performance can be improved.

In a possible design, the obtaining a first degree of parallelism of the operator includes:

obtaining a third degree of parallelism of the query statement, where the third degree of parallelism indicates a degree of parallelism that can be used when the query statement is executed; and
determining a fourth degree of parallelism, where the fourth degree of parallelism is an accumulation of second degrees of parallelism of processed operators, and determining, based on the third degree of parallelism and the fourth degree of parallelism, the first degree of parallelism of the operator currently to be processed.

In the foregoing manner, the first degree of parallelism of the currently to-be-processed operator may be determined based on the third degree of parallelism corresponding to the query statement and the fourth degree of parallelism corresponding to each operator for which the second degree of parallelism is determined, so that resources can be appropriately used, and database performance is improved.

In a possible design, the determining a fourth degree of parallelism, and determining, based on the third degree of parallelism and the fourth degree of parallelism, the first degree of parallelism of the operator currently to be processed includes:

determining a product of the second degrees of parallelism of the processed operators as the fourth degree of parallelism; and
determining a quotient of the third degree of parallelism and the fourth degree of parallelism as the first degree of parallelism of the currently to-be-processed operator.

In the foregoing manner, the first degree of parallelism of the currently to-be-processed operator is determined based on the third degree of parallelism corresponding to the query statement and the fourth degree of parallelism corresponding to each operator for which the second degree of parallelism is determined, so that resources can be appropriately used, and database performance is improved.

In a possible design, before the determining an operator required for executing the query statement, the method further includes:

obtaining status information of the database;
determining the third degree of parallelism based on the status information of the database, where the third degree of parallelism indicates the degree of parallelism that can be used when the query statement is executed; and
if it is determined that the third degree of parallelism is greater than or equal to a preset value, determining that the query statement is the statement that needs to be executed in the parallel query manner.

In the foregoing manner, when it is determined whether the query statement is executed in the parallel query manner, the degree of parallelism that can be used when the query statement is executed, that is, the third degree of parallelism, may be determined by obtaining the status information of the database. When the third degree of parallelism is greater than or equal to the preset value, the query statement may be executed in the parallel query manner, so that execution efficiency of the query statement can be improved in the foregoing manner.

In a possible design, if the status information of the database includes a maximum quantity of concurrent connections of the database, a current quantity of concurrent connections of the database, and a current quantity of sessions of the database, the determining the third degree of parallelism based on the status information of the database includes:

determining a difference between the maximum quantity of concurrent connections of the database and the current quantity of concurrent connections of the database as a current quantity of available concurrent connections of the database;

determining a quotient of the current quantity of available concurrent connections of the database and the current quantity of sessions of the database as a to-be-processed degree of parallelism; and

determining the third degree of parallelism based on the to-be-processed degree of parallelism and a preset fifth degree of parallelism, where the fifth degree of parallelism represents a degree of parallelism specified by a user when the query statement is executed.

In the foregoing manner, the third degree of parallelism corresponding to the query statement is determined by selecting the maximum quantity of concurrent connections of the database, the current quantity of concurrent connections of the database, and the current quantity of sessions of the database as the status information of the database, so that accuracy of determining the third degree of parallelism can be improved. This further helps improve query efficiency of the query statement, resource utilization corresponding to the database, and database performance.

In a possible design, the determining the third degree of parallelism based on the to-be-processed degree of parallelism and a preset fifth degree of parallelism includes:

determining a minimum value between the to-be-processed degree of parallelism and the preset fifth degree of parallelism as the third degree of parallelism if it is determined that the preset fifth degree of parallelism exists.

In the foregoing manner, a smaller value between the fifth degree of parallelism and the to-be-processed degree of parallelism is selected as the third degree of parallelism, so that resource information can be fully used while a user requirement is met, and resource utilization and database performance are improved.

In a possible design, the method further includes:

determining the to-be-processed degree of parallelism as the third degree of parallelism if it is determined that the preset fifth degree of parallelism does not exist.

In the foregoing manner, when the third degree of parallelism is determined, setting of the degree of parallelism of the query statement by the user and the to-be-processed degree of parallelism are fully considered, so that resource information can be fully used while the user requirement is met, and resource utilization and database performance are improved.

In a possible design, the obtaining available resource information of the operator includes:

determining available resource information of the database at a historical moment; and

performing linear interpolation processing based on the available resource information at the historical moment, to determine the available resource information of the operator.

In the foregoing manner, the manner of predicting the available resource information at a current moment by performing linear interpolation processing on the available resource information at the historical moment is simple, and does not need to occupy a large quantity of processing resources. This helps improve resource utilization efficiency and database performance.

In a possible design, the determining available resource information of the database at a historical moment includes:

obtaining first permission information of the user initiating the query statement, second permission information of the database, and available resource information of a system at the historical moment, where the first permission information indicates available resource information for the user to access the database at the historical moment, and the second permission information indicates available resource information allocated to the database at the historical moment; and

determining the available resource information of the database at the historical moment based on the first permission information, the second permission information, and the available resource information of the system at the historical moment.

In the foregoing manner, when it is determined to obtain the available resource information at the historical moment, the first permission information of the user, the second permission information, and the available resource information of the system at the historical moment are further fully considered, to ensure accuracy of the obtained available resource information of the database at the historical moment.

In a possible design, the obtaining available resource information of the operator includes:

obtaining third permission information of the user initiating the query statement, fourth permission information of the database, and available resource information of the system at a current moment, where the third permission information indicates available resource information for the user to access the database at the current moment, and the fourth permission information indicates available resource information allocated to the database at the current moment; and
determining the available resource information of the operator based on the third permission information, the fourth permission information, and the available resource information of the system at the current moment.

In the foregoing manner, when the available resource information of the operator is determined, the third permission information of the user, the fourth permission information of the database, and the available resource information of the system at the current moment are further fully considered, to ensure accuracy of the available resource information of the operator. This helps subsequently adjust the degree of parallelism of the operator based on the available resource information of the operator.

In a possible design, the available resource information includes one or more of the following information: idle resource information of a central processing unit, remaining information of memory space, and idle resource information of an input/output.

In a possible design, the method further includes:

obtaining the third degree of parallelism and a total quantity of operators if the available resource information of the operator is not obtained, where the third degree of parallelism indicates the degree of parallelism that can be used when the query statement is executed; and
determining the second degree of parallelism of the operator based on the third degree of parallelism and the total quantity of operators.

In the foregoing manner, when a current available resource of the operator cannot be obtained, the second degree of parallelism of the operator may be directly obtained through calculation based on the third degree of parallelism corresponding to the query statement and the total quantity of operators, to determine the second degree of parallelism of the operator.

According to a second aspect, this application provides a database query apparatus, including:

a first determining unit, configured to determine, in response to a query statement, an operator required for executing the query statement, where the query statement indicates to obtain to-be-queried data in a database, and the query statement is a statement that needs to be executed in a parallel query manner;
a first obtaining unit, configured to obtain available resource information of the operator;
a second obtaining unit, configured to obtain a first degree of parallelism of the operator, where the first degree of parallelism represents a degree of parallelism that can be currently used when the operator is executed;
a second determining unit, configured to obtain a second degree of parallelism of the operator based on the available resource information of the operator and the first degree of parallelism of the operator, where the second degree of parallelism represents a degree of parallelism used when the operator is actually executed; and
a third determining unit, configured to execute the operator based on the second degree of parallelism of the operator, to obtain and return the to-be-queried data.

In a possible design, the second determining unit includes:

an invoke module, configured to invoke a preset model if it is determined that the first degree of parallelism of the operator is greater than a preset threshold; and
a first determining module, configured to determine the second degree of parallelism of the operator based on the available resource information of the operator, the first degree of parallelism, and the preset model, where the preset model indicates a correspondence among the available resource information, the first degree of parallelism, and the second degree of parallelism.

In a possible design, the correspondence indicated by the preset model meets the following conditions: the available resource information is in negative correlation with a difference result, and the second degree of parallelism is greater than the preset threshold, where the difference result indicates a difference between the first degree of parallelism and the second degree of parallelism.

In a possible design, the apparatus further includes:
a second determining module, configured to determine the preset threshold as the second degree of parallelism of the operator if it is determined that the first degree of parallelism is less than or equal to the preset threshold.

In a possible design, the second obtaining unit includes:

a first obtaining module, configured to obtain a third degree of parallelism of the query statement, where the third degree of parallelism indicates a degree of parallelism that can be used when the query statement is executed; and

a third determining module, configured to: determine a fourth degree of parallelism, where the fourth degree of parallelism is an accumulation of second degrees of parallelism of processed operators, and determine, based on the third degree of parallelism and the fourth degree of parallelism, the first degree of parallelism of the operator currently to be processed.

In a possible design, the third determining module is specifically configured to:

determine a product of the second degrees of parallelism of the processed operators as the fourth degree of parallelism; and
determine a quotient of the third degree of parallelism and the fourth degree of parallelism as the first degree of parallelism of the currently to-be-processed operator.

In a possible design, the apparatus further includes:

a third obtaining unit, configured to obtain status information of the database before the first determining unit determines the operator required for executing the query statement;
a fourth determining unit, configured to determine the third degree of parallelism based on the status information of the database, where the third degree of parallelism indicates the degree of parallelism that can be used when the query statement is executed; and
a fifth determining unit, configured to: if it is determined that the third degree of parallelism is greater than or equal to a preset value, determine that the query statement is the statement that needs to be executed in the parallel query manner.

In a possible design, if the status information of the database includes a maximum quantity of concurrent connections of the database, a current quantity of concurrent connections of the database, and a current quantity of sessions of the database, the fourth determining unit includes:

a fourth determining module, configured to determine a difference between the maximum quantity of concurrent connections of the database and the current quantity of concurrent connections of the database as a current quantity of available concurrent connections of the database;
a fifth determining module, configured to determine a quotient of the current quantity of available concurrent connections of the database and the current quantity of sessions of the database as a to-be-processed degree of parallelism; and
a sixth determining module, configured to determine the third degree of parallelism based on the to-be-processed degree of parallelism and a preset fifth degree of parallelism, where the fifth degree of parallelism represents a degree of parallelism specified by a user when the query statement is executed.

In a possible design, the sixth determining module is specifically configured to:
determine a minimum value between the to-be-processed degree of parallelism and the preset fifth degree of parallelism as the third degree of parallelism if it is determined that the preset fifth degree of parallelism exists.
In a possible design, the apparatus further includes:
a seventh determining module, configured to determine the to-be-processed degree of parallelism as the third degree of parallelism if it is determined that the preset fifth degree of parallelism does not exist.
In a possible design, the first obtaining unit includes:

an eighth determining module, configured to determine available resource information of the database at a historical moment; and
a ninth determining module, configured to perform linear interpolation processing based on the available resource information at the historical moment, to determine the available resource information of the operator.

In a possible design, the eighth determining module is specifically configured to:

obtain first permission information of the user initiating the query statement, second permission information of the database, and available resource information of a system at the historical moment, where the first permission information indicates available resource information for the user to access the database at the historical moment, and the second permission information indicates available resource information allocated to the database at the historical moment; and
determine the available resource information of the database at the historical moment based on the first permission information, the second permission information, and the available resource information of the system at the historical moment.

In a possible design, the first obtaining unit includes:

a second obtaining module, configured to obtain third permission information of the user initiating the query statement, fourth permission information of the database, and available resource information of the system at a current moment, where the third permission information indicates available resource information for the user to access the database at the current moment, and the fourth permission information indicates available resource information allocated to the database at the current moment; and
a tenth determining module, configured to determine the available resource information of the operator based on the third permission information, the fourth permission information, and the available resource information of the system at the current moment.

In a possible design, the available resource information includes one or more of the following information: idle resource information of a central processing unit, remaining information of memory space, and idle resource information of an input/output.
In a possible design, the apparatus further includes:

a fourth obtaining unit, configured to obtain the third degree of parallelism and a total quantity of operators if the available resource information of the operator is not obtained, where the third degree of parallelism indicates the degree of parallelism that can be used when the query statement is executed; and
a sixth determining unit, configured to determine the second degree of parallelism of the operator based on the third degree of parallelism and the total quantity of operators.

According to a third aspect, this application provides an electronic device, including a memory and a processor.
The memory is configured to store processor-executable instructions.
The processor is configured to perform, based on the executable instructions, the method according to any one of the possible implementations of the first aspect.
According to a fourth aspect, this application provides a computer-readable storage medium, where the computer-readable storage medium stores computer-executable instructions. When the computer-executable instructions are executed by a processor, the method according to any one of the possible implementations of the first aspect is implemented.
According to a fifth aspect, this application provides a computer program product, where the computer program product includes a computer program. When the computer program is executed by a processor, the method according to any one of the possible implementations of the first aspect is implemented.
With reference to the foregoing technical solutions, this application provides a database query method and apparatus, a device, and a medium. The method includes: determining, in response to a query statement, an operator required for executing the query statement, where the query statement indicates to obtain to-be-queried data in a database, and the query statement is a statement that needs to be executed in the parallel query manner; obtaining available resource information of the operator and a first degree of parallelism of the operator, where the first degree of parallelism represents a degree of parallelism that can be currently used when the operator is executed; and obtaining a second degree of parallelism of the operator based on the available resource information of the operator and the first degree of parallelism of the operator, where the second degree of parallelism represents a degree of parallelism used when the operator is actually executed; and executing the operator based on the second degree of parallelism of the operator, to obtain and return the to-be-queried data. Further, the degree of parallelism corresponding to the operator is adaptively adjusted based on the available resource information of the operator, and this helps improve resource utilization efficiency and database performance.

**BRIEF** DESCRIPTION OF DRAWINGS

FIG. 1 is a diagram of a processing architecture of a query statement according to this application;
FIG. 2 is a schematic flowchart of a database query method according to an embodiment of this application;
FIG. 3 is a schematic flowchart of a second database query method according to an embodiment of this application;
FIG. 4 is a schematic flowchart of a third database query method according to an embodiment of this application;
FIG. 5 is a schematic flowchart of a fourth database query method according to an embodiment of this application;

FIG. 6 is a diagram of a structure of a database query apparatus according to an embodiment of this application;
FIG. 7 is a diagram of a structure of another database query apparatus according to an embodiment of this application; and
FIG. 8 is a diagram of a structure of an electronic device according to an embodiment of this application.

## DESCRIPTION OF EMBODIMENTS

Embodiments of this application are applied to a server or a terminal device. The server includes but is not limited to a local server or a cloud server.

The following describes some terms in this application, to facilitate understanding of a person skilled in the art. It should be noted that when solutions in embodiments of this application are applied to the server or the terminal device, a name of the server or the terminal device may change, but this does not affect implementation of the solutions in embodiments of this application.

(1) "Parallel query" refers to a technology in which a plurality of processes or threads are created to execute a query statement in parallel in a database, to improve an execution speed of the query statement.
(2) A "degree of parallelism" refers to a quantity of processes or threads required in a process of performing parallel query on data in a database.
(3) A "maximum quantity of concurrent connections" refers to a quantity of concurrent connections that are allowed to connect to a database at the same time, where the "maximum quantity of concurrent connections" may alternatively be referred to as a maximum quantity of connections (Max Connections).
(4) A "current quantity of concurrent connections" refers to a quantity of concurrent connections currently connected to a database, where the "current quantity of concurrent connections" may alternatively be referred to as a current quantity of connections (Current Connections).
(5) A "current quantity of sessions (Current Sessions)" refers to a quantity of sessions that are currently established with a database.
(6) A "maximum degree of parallelism" refers to a largest quantity of processes or threads used for executing a specified query statement during parallel query based on a database.
(6) "A plurality of" means two or more, and another quantifier is similar to this. The term "and/or" describes an association relationship for associated objects and represents that three relationships may exist. For example, A and/or B may represent the following three cases: Only A exists, both A and B exist, and only B exists. The character "/" usually indicates an "or" relationship between the associated objects.
(7) A "correspondence" may refer to an association relationship or a binding relationship, and that A corresponds to B means that there is an association relationship or a binding relationship between A and B.

It should be noted that nouns or terms in the embodiments of this application may be referred to each other, and are not described again.

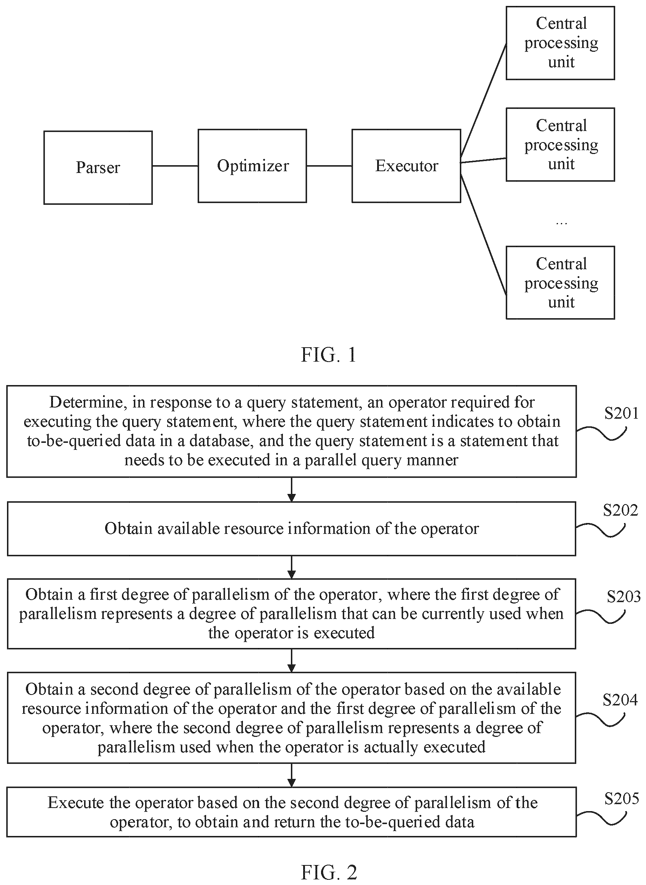

FIG. 1 is a diagram of a processing architecture of a query statement according to this application. As shown in FIG. 1, the query statement in this application indicates to obtain data in a database. The processing architecture in FIG. 1 includes: a parser, an optimizer, an executor, and a plurality of central processing units. The parser, the optimizer, the executor, and the plurality of central processing units may be integrated into a same device. The central processing units may share resources in the device. In other words, the device uses a symmetric multiple processing (Symmetric Multiple Processing, SMP for short) structure.

When processing the query statement, the parser first parses the query statement and sends a parsing result to the optimizer. After receiving the parsing result, the optimizer may generate a serial execution plan and a parallel execution plan, and estimate costs of the serial execution plan and the parallel execution plan, to determine, based on the costs corresponding to the execution plans, whether to currently obtain to-be-queried data indicated by the query statement in a parallel query manner, and determine a final execution plan to be executed. Then, the optimizer sends the determined execution plan to the executor. In some application scenarios, whether the parallel query manner is used may alternatively be specified by a user. When executing the received execution plan, the executor may invoke the central processing unit to process the received execution plan, and finally obtain a to-be-queried statement.

It should be noted that the processing architecture shown in FIG. 1 is merely an example provided in this application. In an actual application process, functions corresponding to the parser, the optimizer, and the executor may alternatively be integrated into same hardware, for example, an SQL (Structured Query Language, structured query language) engine. This is not specifically limited in this application.

In addition, the execution plan mentioned in this application includes at least one operator, and the executor runs the operator in the execution plan, to obtain the to-be-queried data indicated by the query statement. In addition, in an actual running process, operators in the execution plan may be executed in parallel in a multi-process or multi-thread manner, to improve resource utilization.

In an example, a degree of parallelism of the operator (that is, a quantity of processes or threads used to execute the operator) may be determined with reference to a degree of parallelism preset by the user for executing the query statement, a maximum degree of parallelism preset by the user, and a data volume involved in the query statement (herein, the data volume may include a data volume of a table and/or a data volume of an index that are/is indicated by the query statement). Specifically, the degree of parallelism of the operator may be estimated based on the data volume of the table involved in the query statement or the data volume of the index involved in the query statement. Then, a minimum value between the estimated degree of parallelism and the degree of parallelism preset by the user for executing the query statement is used. If the obtained minimum value meets the maximum degree of parallelism preset by the user, the minimum value is used to determine a degree of parallelism of a first operator that needs to be executed in the execution plan. The degree of parallelism of the first operator that needs to be executed is directly reused for another operator in the execution plan. In other words, all the operators use the same degree of parallelism. In addition, the minimum value is determined as the degree of parallelism for executing the entire query statement.

In an example, the degree of parallelism of the operator may be determined based on the degree of parallelism preset by the user for executing the query statement, the data volume involved in the query statement, system operation costs, and configuration information of the central processing unit.

For example, a default degree of parallelism and a maximum degree of parallelism may be predetermined based on the configuration information of the central processing unit. The maximum degree of parallelism may be used as a limiting condition to limit a value of a degree of parallelism corresponding to each operator. When the user does not preset the degree of parallelism for executing the query statement and the device does not enable a function of automatically analyzing and obtaining the degree of parallelism, the device may directly use the default degree of parallelism as the degree of parallelism of each operator in the execution plan and the degree of parallelism for executing the entire query statement. Alternatively, when the user presets the degree of parallelism for executing the query statement, if the degree of parallelism preset by the user for executing the query statement meets a maximum degree of parallelism limitation, the degree of parallelism set by the user may be directly used as the degree of parallelism of each operator in the execution plan and the degree of parallelism for executing the entire query statement. For another example, when the device enables the function of automatically analyzing and obtaining the degree of parallelism, the degree of parallelism of the first operator that needs to be executed in the execution plan may be determined with reference to the system operation costs and the maximum degree of parallelism, and the degree of parallelism of the executed operator is directly reused for another operator in the execution plan. In addition, the degree of parallelism for executing the entire query statement is determined based on the degree of parallelism.

In a possible design, whether to perform the parallel query may be determined by comparing a usage of system resources with a user-preset threshold. In addition, when the user sets the value of the maximum degree of parallelism, the maximum degree of parallelism determined based on configuration of the central processing unit may be recommended to the user as reference information, so that the user selects an appropriate value of the maximum degree of parallelism.

In the foregoing example, when the degree of parallelism is determined, available resource information when each operator is executed is not fully considered. Consequently, a waste of system resources is easily caused, and database performance is affected.

In an example, when it is determined to perform data query in the parallel query manner, the determined execution plan may be divided into a plurality of sub-plans, where one sub-plan includes at least one operator. In an actual execution process, an initial degree of parallelism of each sub-plan may be determined based on an estimated quantity of data output rows of each sub-plan in the execution plan, currently available resources for actual execution of the system, and user resource limitation information. Based on an execution sequence of the sub-plans and an initial degree of parallelism of a current sub-plan, the current sub-plan is executed, information about actual data output rows of the current sub-plan is obtained, and a degree of parallelism of another related sub-plan that is not executed is adjusted with reference to the information about the actual data output rows of the current sub-plan until all sub-plans are executed.

However, in the foregoing example, the degree of parallelism of the operators in the sub-plan is not analyzed and determined, and the degree of parallelism of the operators cannot be adaptively adjusted based on the system resource. Consequently, a waste of system resources is easily caused.

FIG. 2 is a schematic flowchart of a database query method according to an embodiment of this application. As shown in FIG. 2, the method includes the following steps.

S201: Determine, in response to a query statement, an operator required for executing the query statement, where the query statement indicates to obtain to-be-queried data in a database, and the query statement is a statement that needs to be executed in a parallel query manner.

For example, an execution body of this embodiment may be a database query apparatus (referred to as a query apparatus below). The query apparatus may be a server (for example, a local server or a cloud server), or may be a computer, or may be a terminal device (for example, a smart band or a smartwatch), or may be a processor, or may be a chip, or the like. This is not limited in this embodiment.

When the query statement that indicates to obtain the to-be-queried data in the database is received, if it is determined that the query statement is the statement that needs to be executed in the parallel query manner, the operator required for executing the query statement may be first determined.

It may be understood that, in this embodiment, whether the query statement is executed in the parallel query manner may be specified by a user in advance, or may be determined based on a current system resource. This is not specifically limited in this embodiment. For a manner of determining the operator required for executing the query statement, refer to a principle in the conventional technology. Details are not described herein again.

S202: Obtain available resource information of the operator.

For example, in this embodiment, to determine the degree of parallelism of the operator required for executing the query statement, the available resource information of the operator is first obtained.

For example, the available resource information of the operator may be available resource information at a current moment, or may be available resource information at a historical moment close to the current moment. This is not specifically limited herein. In addition, when the available resource information of the operator at the current moment is determined, the available resource information at the current moment may be determined based on historical resource information of each piece of available resource information.

S203: Obtain a first degree of parallelism of the operator, where the first degree of parallelism represents a degree of parallelism that can be currently used when the operator is executed.

For example, to determine the degree of parallelism of the operator, in this embodiment, the degree of parallelism that can be currently used when the operator is executed, that is, the first degree of parallelism, needs to be obtained.

The first degree of parallelism may be specified by the user in advance, or may be determined based on a current idle degree of parallelism in a system. This is not specifically limited in this embodiment.

S204: Obtain a second degree of parallelism of the operator based on the available resource information of the operator and the first degree of parallelism of the operator, where the second degree of parallelism represents a degree of parallelism used when the operator is actually executed.

For example, after the available resource information corresponding to the operator and the first degree of parallelism are determined, the degree of parallelism actually used when the operator is executed, that is, the second degree of parallelism, may be determined based on the available resource information of the operator and the first degree of parallelism.

In an example, when the second degree of parallelism is determined based on the available resource information of the operator and the first degree of parallelism, if the available resource information is greater than a preset value, a value of the first degree of parallelism may be directly used as a value of the second degree of parallelism. If the available resource information is less than or equal to the preset value, a difference between the value of the first degree of parallelism and the preset value may be used as the second degree of parallelism.

It should be noted that, when a plurality of operators are required for executing the query statement, a degree of parallelism corresponding to each of the plurality of operators may be determined in a manner of step S202 to step S204.

In addition, in an example, an order of determining degrees of parallelism of the plurality of operators may be sequentially determined based on a preset operator execution order. This is not specifically limited in this embodiment.

S205: Execute the operator based on the second degree of parallelism of the operator, to obtain and return the to-be-queried data.

For example, in this embodiment, when the second degree of parallelism of the operator is determined, the operator may be executed based on the second degree of parallelism, to obtain final to-be-queried data, and then the to-be-queried data is returned to a data query party.

In a possible implementation, when the plurality of operators are required for executing the query statement, after the degree of parallelism corresponding to each of the plurality of operators is determined, the operators are sequentially executed based on the preset operator execution sequence, to obtain the to-be-queried data.

In another possible implementation, when the plurality of operators are required for executing the query statement, a degree of parallelism of an operator that currently needs to be executed may be first determined based on the preset operator execution sequence, and the operator that currently needs to be executed is executed based on the determined degree of parallelism. Then, when a next operator that needs to be executed is executed, a degree of parallelism required by the operator is determined. The operator is executed based on the degree of parallelism required by the operator. The foregoing process is repeated until all operators are executed, to obtain the query data. In other words, the degree of parallelism corresponding to each operator required for executing the query statement may be adjusted one by one based on the foregoing manner, to improve resource utilization and database performance.

It should be noted that the foregoing two implementations are merely two possible implementations provided in this embodiment of this application. This is not specifically limited in this embodiment.

It may be understood that, in this embodiment, when the degree of parallelism of the operator required for executing the query statement is determined, the degree of parallelism corresponding to the operator is adaptively adjusted based on the available resource information corresponding to the operator, so that when the operator is executed, resource information can be fully used, and resource utilization efficiency and database performance are improved. In addition, when the plurality of operators are required for executing the query statement, the degree of parallelism of each of the plurality of operators may be adaptively adjusted based on the available resource information of the operator in the foregoing manner. Compared with a method for setting a same second degree of parallelism for each operator in the conventional technology, the manner in this embodiment helps improve query efficiency and database performance, and can make full use of resource information.

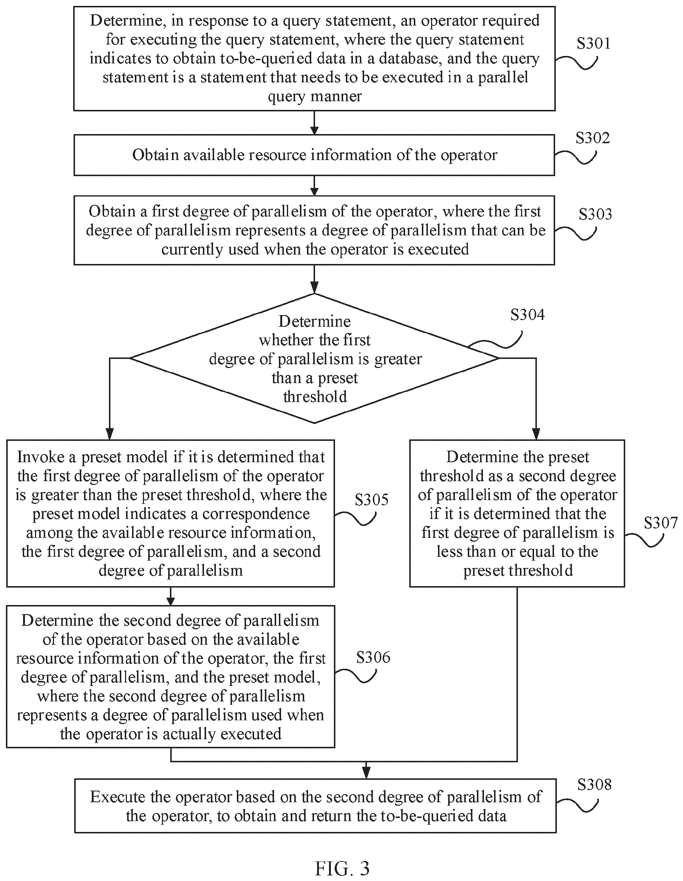

FIG. 3 is a schematic flowchart of a second database query method according to an embodiment of this application. As shown in FIG. 3, the method includes the following steps.

S301: Determine, in response to a query statement, an operator required for executing the query statement, where the query statement indicates to obtain to-be-queried data in a database, and the query statement is a statement that needs to be executed in a parallel query manner.

S302: Obtain available resource information of the operator.

S303: Obtain a first degree of parallelism of the operator, where the first degree of parallelism represents a degree of parallelism that can be currently used when the operator is executed.

For example, for step S301 to step S303 in this embodiment, refer to step S201 to step S203. Details are not described herein again.

In an example, step S302 may be performed according to the following steps: obtaining third permission information of a user initiating the query statement, fourth permission information of the database, and available resource information of a system at a current moment, where the third permission information indicates available resource information for the user to access the database at the current moment, and the fourth permission information indicates available resource information allocated to the database at the current moment; and determining the available resource information of the operator based on the third permission information, the fourth permission information, and the available resource information of the system at the current moment.

For example, the third permission information in this embodiment represents available resource information that can be used when the user accesses the database at the current moment. The fourth permission information is the available resource information allocated to the database at the current moment. For example, in an actual application, when the user accesses the database, due to a limitation of a user permission, the user cannot use all resource information in a device, and can use only available resource information allocated within a user permission range. Similarly, the database may also have a limitation on available resource information. Consequently, the database cannot use all resource information in the device. Therefore, when the available resource information of the operator is determined, the third permission information, the fourth permission information, and the available resource information of the system at the current moment need to be obtained first. The available resource information of the system at the current moment may be considered as resource information of the device that can be used by the entire database system at the current moment.

Then, the available resource information of the operator is determined based on the third permission information, the fourth permission information, and the available resource information of the system at the current moment.

In a possible implementation, if the available resource information that can be used by the user and the available resource information allocated to the database are not limited, it may be considered that the third permission information and the fourth permission information do not exist. In this case, the available resource information of the system at the current moment may be directly used as the available resource information of the operator that finally needs to be determined.

In a possible implementation, if one of the available resource information that can be used by the user and the available resource information allocated to the database is limited (that is, only the third permission information exists or only the fourth permission information exists), a minimum value between limited resource information (that is, currently existing permission information) and the available resource information of the system at the current moment is used as the available resource information of the operator.

In a possible implementation, if both the available resource information that can be used by the user and the available resource information allocated to the database are limited, it may be considered that both the third permission information and the fourth permission information exist. In this case, a minimum value of the third permission information, the fourth permission information, and the available resource information of the system at the current moment may be used as the available resource information of the operator.

It may be understood that, in this embodiment, when the available resource information of the operator is determined, the third permission information of the user, the fourth permission information of the database, and the available resource information of the system at the current moment are further fully considered, to ensure accuracy of the available resource information of the operator. This helps subsequently adjust the degree of parallelism of the operator based on the available resource information of the operator.

S304: Determine whether the first degree of parallelism is greater than a preset threshold.

S305: Invoke a preset model if it is determined that the first degree of parallelism of the operator is greater than the preset threshold, where the preset model indicates a correspondence among the available resource information, the first degree of parallelism, and a second degree of parallelism.

For example, when the second degree of parallelism is determined based on the available resource information of the operator and the first degree of parallelism of the operator, in this embodiment, the first degree of parallelism may be first compared with the preset threshold. When the first degree of parallelism is greater than the preset threshold, the preset model may be invoked. The preset model may indicate the correspondence among the available resource information, the first degree of parallelism, and the second degree of parallelism.

In an example, the correspondence indicated by the preset model meets the following conditions: the available resource information is in negative correlation with a difference result, and the second degree of parallelism is greater than or equal to the preset threshold, where the difference result indicates a difference between the first degree of parallelism and the second degree of parallelism.

For example, in this embodiment, the available resource information, the first degree of parallelism, and the second degree of parallelism in the preset model meet the following correspondence: The available resource information is in negative correlation with a difference result. A larger value of the available resource information indicates that a value of the second degree of parallelism is closer to the first degree of parallelism, where the difference result is a difference between the first degree of parallelism and the second degree of parallelism. In addition, the second degree of parallelism is greater than the preset threshold. In other words, the value of the second degree of parallelism is between the preset threshold and the first degree of parallelism, and a larger value of the available resource information indicates that the value of the second degree of parallelism is closer to the first degree of parallelism.

It may be understood that when the correspondence represented by the preset model meets the foregoing conditions, the second degree of parallelism may be determined based on the current available resource information corresponding to the operator and the first degree of parallelism, so that resource information can be fully used when the operator is executed based on the obtained second degree of parallelism, and resource utilization and database performance are improved.

In an example, the available resource information includes one or more of the following information: idle resource information of a central processing unit, remaining information of memory space, and idle resource information of an input/output.

For example, the available resource information in this embodiment may specifically include one or more of the idle resource information of the central processing unit, the remaining information of the memory space, and the idle resource information of the input/output (Input/Output, I/O for short). For example, the idle resource information of the central processing unit may be represented by an idle time ratio of the central processing unit. The idle resource information of the input/output (Input/Output, I/O for short) may be represented by an idle time ratio of an I/O resource.

In an actual use process, if the available resource information includes the idle resource information of the central processing unit, the remaining information of the memory space, and the idle resource information of the input/output, the preset model provided in this embodiment of this application may be represented according to the following formula:

$$g\left(x,y,z,r\right)=\frac{2\times\left(r-2\right)}{1+e^{-i\cdot x-j\cdot y-k\cdot z}}-(r-4),r>2$$

The idle resource information of the central processing unit, the remaining information of the memory space, and the idle resource information of the input/output are represented by symbols x, y, and z respectively. i, j, and k are preset constants greater than 0. r represents the first degree of parallelism. 2 in the foregoing formula may be considered as the preset threshold. In other words, r>2 indicates that the first degree of parallelism is greater than the preset threshold. The value of the second degree of parallelism may be determined based on the correspondence indicated by the foregoing formula. In other words, a value range of the second degree of parallelism is determined between (2, r).

S306: Determine the second degree of parallelism of the operator based on the available resource information of the operator, the first degree of parallelism, and the preset model, where the second degree of parallelism represents a degree of parallelism used when the operator is actually executed.

For example, in this embodiment, after the preset model is obtained, the second degree of parallelism corresponding to the operator may be determined based on the correspondence indicated by the preset model, the available resource information of the operator, and the first degree of parallelism of the operator.

It may be understood that, when the second degree of parallelism is determined based on the available resource information of the operator and the first degree of parallelism, if it is determined that the first degree of parallelism is greater than the preset threshold, the second degree of parallelism may be directly determined based on the preset model, the available resource information, and the first degree of parallelism. Then, according to the foregoing method, when the first degree of parallelism is greater than the preset threshold, the second degree of parallelism may be adaptively determined based on the available resource information of the operator and the preset model, so that when the operator is executed, the available resource information can be fully used, and resource utilization efficiency and database performance are improved.

S307: Determine the preset threshold as a second degree of parallelism of the operator if it is determined that the first degree of parallelism is less than or equal to the preset threshold.

For example, when the first degree of parallelism is compared with the preset threshold, if a value of the first degree of parallelism is less than or equal to the preset threshold, the preset threshold may be directly used as the second degree of parallelism of the operator.

In this case, the preset threshold may be considered as a minimum value that is preset by the user and that is used for the degree of parallelism corresponding to the operator. The preset threshold may be 2 in an actual use process. When it is determined that the first degree of parallelism of the operator is less than or equal to 2, the value of the second degree of parallelism of the operator may be directly determined as 2, so that execution efficiency of the operator, system resource utilization, and database performance can be improved.

S308: Execute the operator based on the second degree of parallelism of the operator, to obtain and return the to-be-queried data.

For example, for step S308, refer to step S205. Details are not described herein again.

It may be understood that, in this embodiment, when the second degree of parallelism is determined based on the available resource information of the operator and the first degree of parallelism, if it is determined that the first degree of parallelism is greater than the preset threshold, the second degree of parallelism may be directly determined based on the preset model, the available resource information, and the first degree of parallelism. Then, according to the foregoing method, when the first degree of parallelism is greater than the preset threshold, the degree of parallelism of the operator may be adaptively determined based on the available resource information of the operator and the preset model, so that when the operator is executed, the available resource information can be fully used, and resource utilization efficiency and database performance are improved.

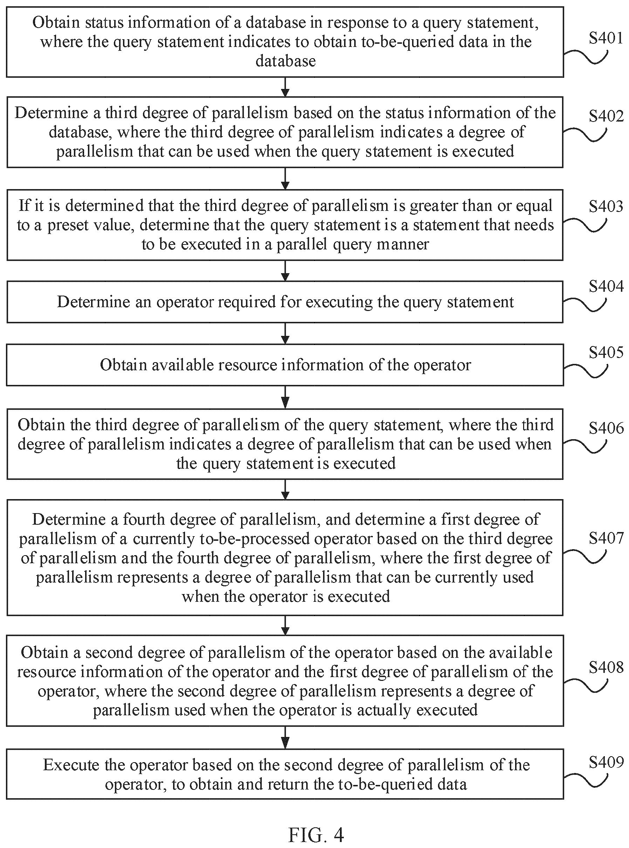

FIG. 4 is a schematic flowchart of a third database query method according to an embodiment of this application. As shown in FIG. 4, the method includes the following steps.

S401: Obtain status information of a database in response to a query statement, where the query statement indicates to obtain to-be-queried data in the database.

For example, in this embodiment, when data query is performed, the status information corresponding to the database indicated by the query statement may be first obtained. The status information may be a parameter indicator value related to the data query, and a user may predetermine which parameter indicator is selected.

In an example, the status information includes one or more of a maximum quantity of concurrent connections of the database, a current quantity of concurrent connections of the database, a current quantity of sessions of the database, and a quantity of processes supported by a database system.

S402: Determine a third degree of parallelism based on the status information of the database, where the third degree of parallelism indicates a degree of parallelism that can be used when the query statement is executed.

For example, after the status information of the database is obtained, the degree of parallelism that can be used when the query statement is executed, that is, the third degree of parallelism, may be determined based on the status information of the database.

In an example, a correspondence between the status information of the database and the third degree of parallelism may be preset, and the third degree of parallelism may be determined based on the correspondence between the status information of the database and the third degree of parallelism and the currently obtained status information of the database.

In an example, if the status information of the database includes the maximum quantity of concurrent connections of the database, the current quantity of concurrent connections of the database, and the current quantity of sessions of the database, step S402 includes the following steps:

First step of step S402: Determine a difference between the maximum quantity of concurrent connections of the database and the current quantity of concurrent connections of the database as a current quantity of available concurrent connections of the database.

Second step of step S402: Determine a quotient of the current quantity of available concurrent connections of the database and the current quantity of sessions of the database as a to-be-processed degree of parallelism.

Third step of step S402: Determine the third degree of parallelism based on the to-be-processed degree of parallelism and a preset fifth degree of parallelism, where the fifth degree of parallelism represents a degree of parallelism specified by the user when the query statement is executed.

For example, the status information of the database in this example may include the maximum quantity of concurrent connections of the database, the current quantity of concurrent connections of the database, and the current quantity of sessions of the database. When the third degree of parallelism is determined, the difference between the maximum quantity of concurrent connections of the database and the current quantity of concurrent connections of the database may be first determined, and the difference is used as the current quantity of available concurrent connections of the database. Then, quotient processing is performed on the current quantity of available concurrent connections of the database and the current quantity of sessions of the database, and an obtained quotient value is used as the to-be-processed degree of parallelism. Finally, the third degree of parallelism corresponding to the query statement is determined based on the obtained to-be-processed degree of parallelism and the degree of parallelism (that is, the fifth degree of parallelism) that is specified by the user and that is used to execute the query statement.

In an example, after the fifth degree of parallelism and the to-be-processed degree of parallelism are obtained, if a difference between the fifth degree of parallelism and the to-be-processed degree of parallelism is less than a preset value, the fifth degree of parallelism may be determined as the third degree of parallelism; otherwise, the to-be-processed degree of parallelism is used as the third degree of parallelism.

It may be understood that, in this embodiment, the third degree of parallelism corresponding to the query statement is determined by selecting the maximum quantity of concurrent connections of the database, the current quantity of concurrent connections of the database, and the current quantity of sessions of the database as the status information of the database, so that accuracy of determining the third degree of parallelism can be improved. This further helps improve query efficiency of the query statement, resource utilization corresponding to the database, and database performance.

In an example, the third step of step S402 may be implemented through the following step:
Determine a minimum value between the to-be-processed degree of parallelism and the preset fifth degree of parallelism as the third degree of parallelism if it is determined that the preset fifth degree of parallelism exists.

For example, in this embodiment, when the preset fifth degree of parallelism exists, a smaller value of the fifth degree of parallelism and the to-be-processed degree of parallelism is used as the third degree of parallelism corresponding to the query statement.

It may be understood that, the smaller value between the fifth degree of parallelism and the to-be-processed degree of parallelism is selected as the third degree of parallelism, so that resource information can be fully used while a user requirement is met, and resource utilization and database performance are improved.

In an example, based on the foregoing embodiment, the to-be-processed degree of parallelism is determined as the third degree of parallelism if it is determined that the preset fifth degree of parallelism does not exist.

For example, in this embodiment, if the user does not set the fifth degree of parallelism in advance, the to-be-processed degree of parallelism may be directly used as the third degree of parallelism. It may be understood that, in this embodiment, when the third degree of parallelism is determined, setting of the degree of parallelism of the query statement by the user and the to-be-processed degree of parallelism are fully considered, so that resource information can be fully used while the user requirement is met, and resource utilization and database performance are improved.

S403: If it is determined that the third degree of parallelism is greater than or equal to a preset value, determine that the query statement is the statement that needs to be executed in the parallel query manner.

For example, if it is determined that the third degree of parallelism is greater than or equal to the preset value, it indicates that there are sufficient processes or threads currently to execute operators in the query statement in parallel. Therefore, in this case, it may be determined that the query statement may be executed in the parallel query manner.

In an example, if it is determined that the third degree of parallelism is less than the preset value, it indicates that there are not sufficient processes or threads to execute operators in the query statement in parallel. Therefore, in this case, the operators in the query statement may be executed in a serial manner.

It may be understood that, in this embodiment, when it is determined whether the query statement is executed in the parallel query manner, the degree of parallelism that can be used when the query statement is executed, that is, the third degree of parallelism, may be determined by obtaining the status information of the database. When the third degree of parallelism is greater than or equal to the preset value, the query statement may be executed in the parallel query manner, so that execution efficiency of the query statement can be improved in the foregoing manner.

S404: Determine an operator required for executing the query statement, where the query statement is a statement that needs to be executed in the parallel query manner.

S405: Obtain available resource information of the operator.

For example, for step S404 and step S405 in this embodiment, refer to step S201 and step S202. Details are not described herein again.

S406: Obtain the third degree of parallelism of the query statement, where the third degree of parallelism indicates a degree of parallelism that can be used when the query statement is executed.

For example, in this embodiment, when a first degree of parallelism of the operator is determined, the third degree of parallelism corresponding to the query statement may be first determined. For a manner of obtaining the third degree of parallelism, refer to descriptions in step S401 and step S402. Details are not described herein again.

S407: Determine a fourth degree of parallelism, where the fourth degree of parallelism is an accumulation of second degrees of parallelism of processed operators, and determine a first degree of parallelism of a currently to-be-processed operator based on the third degree of parallelism and the fourth degree of parallelism, where the first degree of parallelism represents a degree of parallelism that can be currently used when the operator is executed.

For example, in this embodiment, after the third degree of parallelism corresponding to the query statement is

obtained, the accumulation of the second degrees of parallelism of the processed operators may continue to be determined, where the processed operator is an operator for which a second degree of parallelism is determined. The accumulation of the second degrees of parallelism of the processed operators may be considered as all occupied degrees of parallelism of the processed operators. Then, a first degree of parallelism of a currently to-be-processed operator is determined based on the third degree of parallelism and the fourth degree of parallelism, where the currently to-be-processed operator may be considered as an operator for which the second degree of parallelism is currently being determined.

It may be understood that, in this embodiment, the first degree of parallelism of the currently to-be-processed operator may be determined based on the third degree of parallelism corresponding to the query statement and the fourth degree of parallelism corresponding to each operator for which the second degree of parallelism is determined, so that resources can be appropriately used, and database performance is improved.

In an example, step S407 may include the following steps: Determine a product of the second degree of parallelism of the processed operators as the fourth degree of parallelism; and determine a quotient of the third degree of parallelism and the fourth degree of parallelism as the first degree of parallelism of the currently to-be-processed operator.

For example, in this embodiment, when the fourth degree of parallelism corresponding to the currently to-be-processed operator is determined, the product of the second degrees of parallelism of the processed operators may be determined as the to-be-calculated fourth degree of parallelism, and the quotient of the third degree of parallelism and the fourth degree of parallelism is used as the first degree of parallelism of the currently to-be-processed operator.

It may be understood that, in this embodiment, the first degree of parallelism of the currently to-be-processed operator may be determined based on the third degree of parallelism corresponding to the query statement and the fourth degree of parallelism corresponding to each operator for which the second degree of parallelism is determined, so that resources can be appropriately used, and database performance is improved.

In addition, in a possible implementation, the second degrees of parallelism of the operators in the query statement may be determined in an execution sequence of the operators, that is, corresponding to the implementation of step S407. An execution sequence of a currently to-be-processed operator is after an execution sequence of each processed operator.

S408: Obtain the second degree of parallelism of the operator based on the available resource information of the operator and the first degree of parallelism of the operator, where the second degree of parallelism represents a degree of parallelism used when the operator is actually executed.

S409: Execute the operator based on the second degree of parallelism of the operator, to obtain and return the to-be-queried data.

For example, for step S408 and step S409, refer to step S204 and step S205. Details are not described herein again.

It may be understood that, in this embodiment, the first degree of parallelism of the currently to-be-processed operator may be determined based on the third degree of parallelism corresponding to the query statement and the fourth degree of parallelism corresponding to each operator for which the second degree of parallelism is determined, so that resources can be appropriately used, and database performance is improved. In addition, when it is determined whether the query statement is executed in the parallel query manner, the degree of parallelism that can be used when the query statement is executed, that is, the third degree of parallelism, may be determined by obtaining the status information of the database. When the third degree of parallelism is greater than the preset value, the query statement may be executed in the parallel query manner, so that execution efficiency of the query statement can be improved in the foregoing manner.

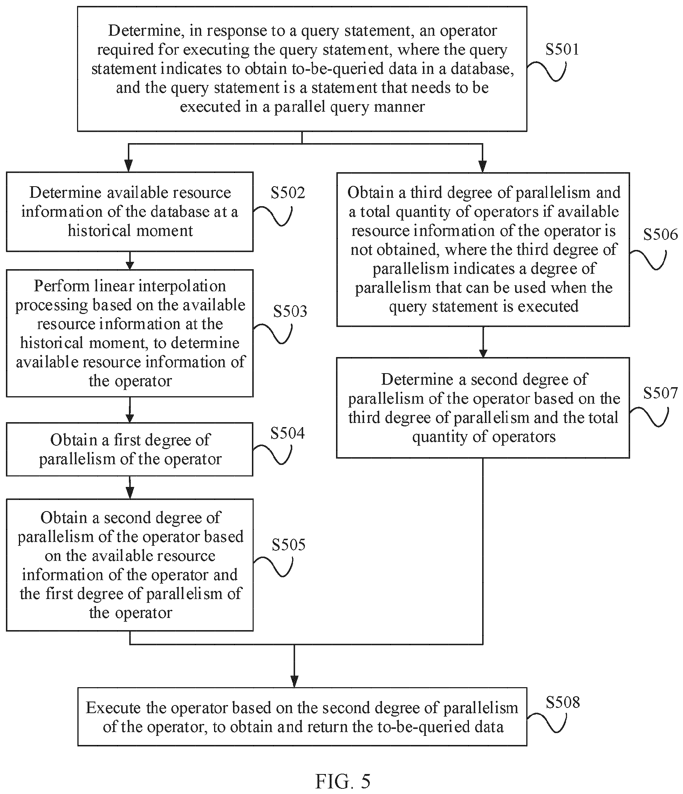

FIG. 5 is a schematic flowchart of a fourth database query method according to an embodiment of this application. As shown in FIG. 5, the method includes the following steps.

S501: Determine, in response to a query statement, an operator required for executing the query statement, where the query statement indicates to obtain to-be-queried data in a database, and the query statement is a statement that needs to be executed in a parallel query manner.

For example, for step S501, refer to step S201. Details are not described herein again.

S502: Determine available resource information of the database at a historical moment.

For example, in this embodiment, when available resource information of the operator is determined, the available resource information of the database at the historical moment may be first obtained.

In an example, the available resource information of the database at the historical moment may be obtained from summary data corresponding to the available resource information of the database at the historical moment.

In an example, step S502 includes the following steps.

First step of step S502: Obtain first permission information of a user initiating the query statement, second permission information of the database, and available resource information of a system at the historical moment, where the first permission information indicates available resource information for the user to access the database at the historical moment, and the second permission information indicates available resource information allocated to the database at the historical moment.

Second step of step S502: Determine the available resource information of the database at the historical moment based on the first permission information, the second permission information, and the available resource information of the system at the historical moment.

For example, the first permission information in this embodiment represents available resource information that can be used when the user accesses the database at the historical moment. The second permission information is all the available resource information allocated to the database at the historical moment. For example, in an actual application, when the user accesses the database, due to a limitation of a user permission, the user cannot use all resource information in a device, and can use only all available resource information allocated within a user permission range. Similarly, the database may also have a limitation on available resource information. Consequently, the database cannot use all resource information in the device. Therefore, when historical available resource information of the database is determined, the first permission information, the second permission information, and the available resource information of the system at the historical moment need to be first obtained. The available resource information of the system at the historical moment may be considered as resource information of the device that can be used by the database system at the historical moment.

Then, the available resource information of the database at the historical moment is determined based on the first permission information, the second permission information, and the available resource information of the system at the historical moment.

In a possible implementation, if the available resource information of the user and the available resource information allocated to the database are not limited, it may be considered that the first permission information and the second permission information do not exist. In this case, the available resource information of the system at the historical moment may be directly used as the available resource information that needs to be finally determined and that is of the database at the historical moment.

In a possible implementation, if one of the available resource information that can be used by the user and the available resource information allocated to the database is limited, (that is, only the first permission information exists or only the second permission information exists), a minimum value between the limited resource information (that is, currently existing permission information) and the available resource information of the system at the historical moment is used as the available resource information of the database at the historical moment.

In a possible implementation, if both the available resource information that can be used by the user and the available resource information allocated to the database are limited, it may be considered that both the first permission information and the second permission information exist. In this case, a minimum value of the first permission information, the second permission information, and the available resource information of the system at the historical moment may be used as the available resource information of the database at the historical moment.

It may be understood that, in this embodiment, when it is determined to obtain the available resource information of the database at the historical moment, the first permission information of the user, the second permission information, and the available resource information of the system at the historical moment are further fully considered, to ensure accuracy of the obtained available resource information of the database at the historical moment.

S503: Perform linear interpolation processing based on the available resource information at the historical moment, to determine the available resource information of the operator.

For example, after the available resource information at the historical moment is obtained, linear interpolation processing may be performed on the obtained available resource information at the historical moment, to obtain the available resource information of the operator. For example, a fitted curve including available resource information at a plurality of historical moments may be obtained in a linear interpolation processing manner, and then available resource information at a current moment is determined based on the fitted curve and a value of the current moment. The obtained available resource information at the current moment may be determined as the available resource information of the operator. In this embodiment, when linear interpolation processing is performed, a quantity of pieces of available resource information at the historical moment is not specifically limited.

In an example, when the available resource information at the historical moment is obtained, linear interpolation processing is performed after normalization processing is performed on the resource information, to reduce a calculation amount of subsequent linear interpolation processing.

It may be understood that, in this embodiment, the manner of predicting the available resource information of the operator by performing linear interpolation processing on the available resource information at the historical moment is simple, and does not need to occupy a large quantity of processing resources. This helps improve resource utilization efficiency and database performance.

S504: Obtain a first degree of parallelism of the operator, where the first degree of parallelism represents a degree of parallelism that can be currently used when the operator is executed.

S505: Obtain a second degree of parallelism of the operator based on the available resource information of the operator and the first degree of parallelism of the operator, where the second degree of parallelism represents a degree of parallelism used when the operator is actually executed.

For example, for step S504 and step S505, refer to step S203 and step S204. Details are not described herein again.

S506: Obtain a third degree of parallelism and a total quantity of operators if available resource information of the operator is not obtained, where the third degree of parallelism indicates a degree of parallelism that can be used when the query statement is executed.

For example, in this embodiment, when the available resource information of the operator cannot be obtained, for example, when there is no permission to obtain the available resource information or no result is returned for a long time when the linear interpolation processing is performed, the third degree of parallelism corresponding to the query statement may be obtained, that is, the degree of parallelism that can be used when the query statement is executed. For a specific obtaining manner, refer to descriptions in step S401 and step S402. Details are not described herein again. In addition, a total quantity of operators required for executing the query statement is determined.

S507: Determine a second degree of parallelism of the operator based on the third degree of parallelism and the total quantity of operators.

For example, after the third degree of parallelism and the total quantity of operators are determined, the second degree of parallelism of the operator may be determined based on the third degree of parallelism and the total quantity of operators. For example, the total quantity of operators may be used as a root index, and the third degree of parallelism is used as a radicand. Root extraction processing is performed on the third degree of parallelism, and a root extraction result is used as the second degree of parallelism of the operator.

In addition, in a possible implementation, if the result obtained after root extraction processing is less than a preset threshold, the preset threshold may be directly used as the second degree of parallelism of the operator.

It may be understood that, when a current available resource of the operator cannot be obtained, the second degree of parallelism of the operator may be directly obtained through calculation based on the third degree of parallelism corresponding to the query statement and the total quantity of operators, to determine the second degree of parallelism of the operator.

S508: Execute the operator based on the second degree of parallelism of the operator, to obtain and return the to-be-queried data.

For example, for step S508, refer to step S205. Details are not described herein again.

It may be understood that, in this embodiment, the manner of predicting the available resource information of the operator by performing linear interpolation processing on the available resource information at the historical moment is simple, and does not need to occupy a large quantity of processing resources. This helps improve resource utilization efficiency. In addition, when it is determined to obtain the available resource information at the historical moment, the first permission information of the user and the second permission information are further fully considered, to ensure accuracy of the determined available resource information of the operator.

The following query statement is an example of a query statement provided in this application. The following execution plans are described by using the query statement as an example.

t1 and t2 represent data table names of two data tables in a database respectively. Table t1 includes two columns: t1_a and t1_b. Types of the two columns are both integer (BIGINT). In addition, table t2 includes two columns: t2_id and t2_a. Types of the two columns are both integer (BIGINT). Data is inserted into table t1. Data from 1 to 3,000,000 (at an interval of 1) is generated for t1_a based on a sequence. Data from 1 to 10,000 (at an interval of 1) is generated for t1_b based on a sequence, and the data is generated cyclically 300 times. A quantity of data volume in table t1 is 3,000,000. Data is inserted into table t2. Data from 1 to 2,000,000 (at an interval of 1) is generated for t2_id based on a sequence. Data from 1 to 200,000 (at an interval of 1) is generated for t2_a based on a sequence, and the data is generated cyclically 10 times. A quantity of data volume in table t2 is 2,000,000.

The query statement is as follows:

```
select
  t1_b
from
  (
    select t1_b
  from t1
   where
     t1_b in
       (13, 31, 23, 29, 30, 18, 17)
     and not exists (
       select * from t2 where t2_a = t1_a
     )
  );
```

In a possible case, status information of the database includes a maximum quantity of concurrent connections of the database, a current quantity of concurrent connections of the database, and a current quantity of sessions of the database, and a corresponding to-be-processed degree of parallelism may be calculated based on the following formula:

$$\text{avail\_dop} = (\text{max\_con} - \text{cur\_con}) / \text{cur\_sess}$$

$$\text{run\_dop} = \min(\text{avail\_dop}, \text{query\_dop})$$

avail_dop represents the to-be-processed degree of parallelism; max_con represents the maximum quantity of concurrent connections of the database; cur_con represents the current quantity of concurrent connections of the database; and cur_sess represents the current quantity of sessions of the database. A fifth degree of parallelism preset by the user is represented by query_dop. run_dop represents the third degree of parallelism.

When max_con = 100, cur_con = 60, cur_sess = 40, and query_dop=16, because a calculation result of run_dop is less than a preset value 2, the query statement is executed in a serial execution manner.

When it is determined to execute the query statement in the serial execution manner, the operator in the execution plan corresponding to the query statement is further determined.

In this case, the execution plan corresponding to the query statement may be represented in the following manner:

```
Hash Right Anti Join
    Hash Cond: (t2.t2_a = t1.t1_a)
    -> Seq Scan on t2
    -> Hash
            -> Seq Scan on t1
                    Filter: (t1_b = ANY ('{13,31,23,29,30,18,17}'::bigint[]))
                    Rows Removed by Filter: 2997900
    (7 rows)
```

In another possible case, if it is determined that the calculation result of run_dop is greater than or equal to the preset threshold 2, the query statement may be executed in a parallel query manner. When the degree of parallelism of the operator is determined, if it is determined that the available resource information of the operator cannot be obtained, the degree of parallelism of the operator may be directly determined based on the third degree of parallelism run_dop and the total quantity of operators. In this case, an example in which run_dop is 8 is used for description. For example, when the query statement is executed in the parallel query manner, the following is an execution plan corresponding to the query statement, and the execution plan includes an operator required for executing the query statement.

The execution plan includes three Stream operators in total. In this case, the root extraction result 2 is directly used as the degree of parallelism of the operators. The execution plan is as follows:

```
Streaming(type: LOCAL GATHER dop: 1/2)
            -> Hash Right Anti Join
                    Hash Cond: (t2.t2_a = t1.t1_a)
                    -> Streaming(type: LOCAL REDISTRIBUTE dop: 2/2)
                            -> Seq Scan on t2
                    -> Hash
                            -> Streaming(type: LOCAL REDISTRIBUTE dop: 2/2)
                                    -> Seq Scan on t1
                                            Filter: (t1_b = ANY
                                            ('{13,31,23,29,30,18,17}'::bigint[]))
                                            Rows Removed by Filter: 2997900
        (10 rows)
```

In still another possible case, if it is determined that the calculation result of run_dop is greater than or equal to the preset threshold 2, the query statement may be executed in a parallel query manner. In this case, an example in which it is assumed that run_dop is 48 is used for description. When the degree of parallelism of the operator is determined, if the available resource information of the operator can be obtained, the execution plan corresponding to the query statement may be represented in the following manner:

```
Streaming(type: LOCAL GATHER dop: 1/3)
        -> Hash Right Anti Join
                Hash Cond: (t2.t2_a = t1.t1_a)
                -> Streaming(type: LOCAL REDISTRIBUTE dop: 4/4)
                        -> Seq Scan on t2
                -> Hash
                        -> Streaming(type: LOCAL REDISTRIBUTE dop: 4/4)
```

```
            -> Seq Scan on t1
                  Filter: (t1_b = ANY
                  ('{13,31,23,29,30,18,17}'::bigint[]))
                  Rows Removed by Filter: 2997900
(10 rows)
```

Degrees of parallelism of the operators are 4, 4, and 3 in sequence. In addition, a sequence of determining the degrees of parallelism of the operators may be sequentially determined based on an ascending order (that is, an execution sequence of the operators) of the operators in the execution plan.

In still another possible case, if the user does not specify query_dop, that is, the preset fifth degree of parallelism, a value of avail_dop may be directly determined as a value of run_dop. If the value of run_dop is greater than or equal to the preset threshold 2, the query statement may be executed in the parallel query manner.

An example in which run_dop is 18 is used for description.

When the degree of parallelism of the operator required for executing the query statement is determined, if it is determined that the available resource information of the operator can be currently obtained, the second degree of parallelism of the operator may be determined based on the available resource information of the operator and the first degree of parallelism of the operator. In this case, the execution plan corresponding to the query statement may be represented in the following manner:

```
Streaming(type: LOCAL GATHER dop: 1/2)
    -> Hash Right Anti Join
          Hash Cond: (t2.t2_a = t1.t1_a)
          -> Streaming(type: LOCAL REDISTRIBUTE dop: 3/3)
                -> Seq Scan on t2
          -> Hash
                -> Streaming(type: LOCAL REDISTRIBUTE dop: 3/3)
                      -> Seq Scan on t1
                            Filter: (t1_b = ANY
                            ('{13,31,23,29,30,18,17}'::bigint[]))
                            Rows Removed by Filter: 2997900
(10 rows)
```

Degrees of parallelism of the operators are 3, 3, and 2 in sequence. In addition, a sequence of determining the degrees of parallelism of the operators may be sequentially determined based on an ascending order (that is, an execution sequence of the operators) of the operators in the execution plan.

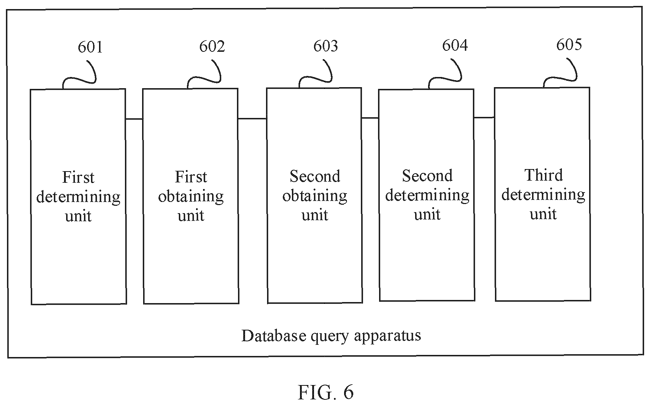

FIG. 6 is a diagram of a structure of a database query apparatus according to an embodiment of this application. The database query apparatus includes:

a first determining unit 601, configured to determine, in response to a query statement, an operator required for executing the query statement, where the query statement indicates to obtain to-be-queried data in a database, and the query statement is a statement that needs to be executed in a parallel query manner;

a first obtaining unit 602, configured to obtain available resource information of the operator;

a second obtaining unit 603, configured to obtain a first degree of parallelism of the operator, where the first degree of parallelism represents a degree of parallelism that can be currently used when the operator is executed;

a second determining unit 604, configured to obtain a second degree of parallelism of the operator based on the available resource information of the operator and the first degree of parallelism of the operator, where the second degree of parallelism represents a degree of parallelism used when the operator is actually executed; and

a third determining unit 605, configured to execute the operator based on the second degree of parallelism of the operator, to obtain and return the to-be-queried data.

The apparatus provided in this embodiment is configured to implement the technical solutions provided in the foregoing method. Implementation principles and technical effects thereof are similar, and details are not described again.

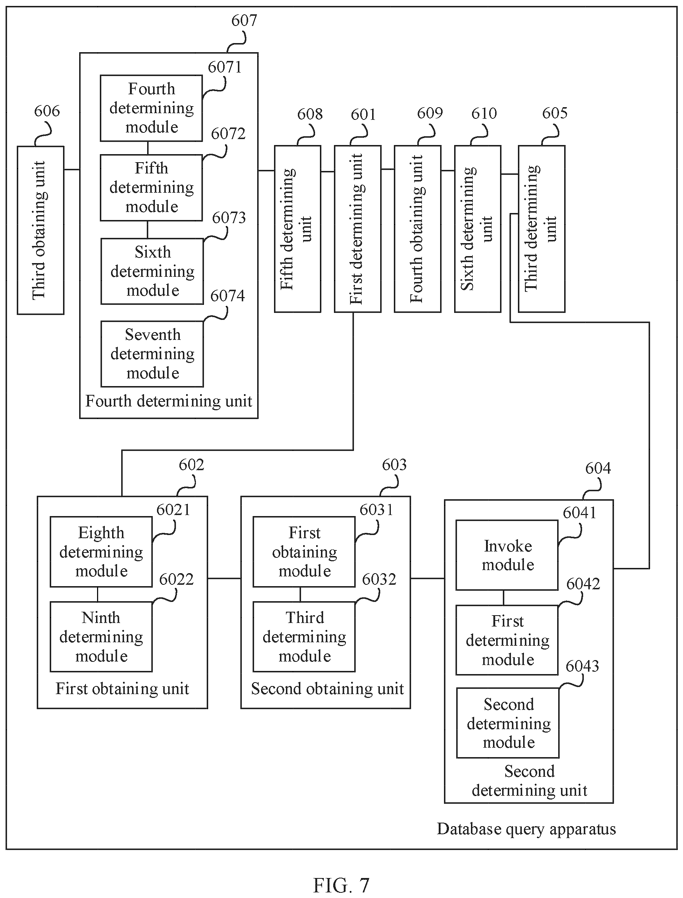

FIG. 7 is a diagram of a structure of another database query apparatus according to an embodiment of this application. On the basis of the diagram of the structure shown in FIG. 6, in this embodiment, the second determining unit 604 includes:

an invoke module 6041, configured to invoke a preset model if it is determined that the first degree of parallelism of the operator is greater than a preset threshold; and

a first determining module 6042, configured to determine the second degree of parallelism of the operator based on the available resource information of the operator, the first degree of parallelism, and the preset model, where the preset model indicates a correspondence among the available resource information, the first degree of parallelism, and the second degree of parallelism.

In a possible design, the correspondence indicated by the preset model meets the following conditions: the available resource information is in negative correlation with a difference result, and the second degree of parallelism is greater than the preset threshold, where the difference result indicates a difference between the first degree of parallelism and the second degree of parallelism.

In a possible design, the apparatus further includes:
a second determining module 6043, configured to determine the preset threshold as the second degree of parallelism of the operator if it is determined that the first degree of parallelism is less than or equal to the preset threshold.

In a possible design, the second obtaining unit 603 includes:

a first obtaining module 6031, configured to obtain a third degree of parallelism of the query statement, where the third degree of parallelism indicates a degree of parallelism that can be used when the query statement is executed; and
a third determining module 6032, configured to: determine a fourth degree of parallelism, where the fourth degree of parallelism is an accumulation of second degrees of parallelism of processed operators, and determine a first degree of parallelism of a currently to-be-processed operator based on the third degree of parallelism and the fourth degree of parallelism.

In a possible design, the third determining module 6031 is specifically configured to:

determine a product of the second degrees of parallelism of the processed operators as the fourth degree of parallelism; and
determine a quotient of the third degree of parallelism and the fourth degree of parallelism as the first degree of parallelism of the currently to-be-processed operator.

In a possible design, the apparatus further includes:

a third obtaining unit 606, configured to obtain status information of the database before the first determining unit 601 determines the operator required for executing the query statement;
a fourth determining unit 607, configured to determine the third degree of parallelism based on the status information of the database, where the third degree of parallelism indicates the degree of parallelism that can be used when the query statement is executed; and
a fifth determining unit 608, configured to: if it is determined that the third degree of parallelism is greater than or equal to a preset value, determine that the query statement is the statement that needs to be executed in the parallel query manner.

In a possible design, if the status information of the database includes a maximum quantity of concurrent connections of the database, a current quantity of concurrent connections of the database, and a current quantity of sessions of the database, the fourth determining unit 607 includes:

a fourth determining module 6071, configured to determine a difference between the maximum quantity of concurrent connections of the database and the current quantity of concurrent connections of the database as a current quantity of available concurrent connections of the database;
a fifth determining module 6072, configured to determine a quotient of the current quantity of available concurrent connections of the database and the current quantity of sessions of the database as a to-be-processed degree of parallelism; and
a sixth determining module 6073, configured to determine the third degree of parallelism based on the to-be-processed degree of parallelism and a preset fifth degree of parallelism, where the fifth degree of parallelism represents a degree of parallelism specified by a user when the query statement is executed.

In a possible design, the sixth determining module 6073 is specifically configured to:
determine a minimum value between the to-be-processed degree of parallelism and the preset fifth degree of parallelism as the third degree of parallelism if it is determined that the preset fifth degree of parallelism exists.

In a possible design, the apparatus further includes:
a seventh determining module 6074, configured to determine the to-be-processed degree of parallelism as the third degree of parallelism if it is determined that the preset fifth degree of parallelism does not exist.

In a possible design, the first obtaining unit 602 includes:

an eighth determining module 6021, configured to determine available resource information of the database at a historical moment; and

a ninth determining module 6022, configured to perform linear interpolation processing based on the available resource information at the historical moment, to determine the available resource information of the operator.

In a possible design, the eighth determining module 6021 is specifically configured to:

obtain first permission information of the user initiating the query statement, second permission information of the database, and available resource information of a system at the historical moment, where the first permission information indicates available resource information for the user to access the database at the historical moment, and the second permission information indicates available resource information allocated to the database at the historical moment; and
determine the available resource information of the database at the historical moment based on the first permission information, the second permission information, and the available resource information of the system at the historical moment.

In a possible design, the first obtaining unit includes:

a second obtaining module, configured to obtain third permission information of the user initiating the query statement, fourth permission information of the database, and available resource information of the system at a current moment, where the third permission information indicates available resource information for the user to access the database at the current moment, and the fourth permission information indicates available resource information allocated to the database at the current moment; and
a tenth determining module, configured to determine the available resource information of the operator based on the third permission information, the fourth permission information, and the available resource information of the system at the current moment.

In a possible design, the available resource information includes one or more of the following information: idle resource information of a central processing unit, remaining information of memory space, and idle resource information of an input/output.
In a possible design, the apparatus further includes:

a fourth obtaining unit 609, configured to obtain the third degree of parallelism and a total quantity of operators if the available resource information of the operator is not obtained, where the third degree of parallelism indicates the degree of parallelism that can be used when the query statement is executed; and
a sixth determining unit 610, configured to determine the second degree of parallelism of the operator based on the third degree of parallelism and the total quantity of operators.

The apparatus provided in this embodiment is configured to implement the technical solutions provided in the foregoing method. Implementation principles and technical effects thereof are similar, and details are not described again.
An embodiment of this application provides an electronic device, including a memory and a processor.
The memory is configured to store processor-executable instructions.
The processor is configured to perform the method based on the executable instructions.
The electronic device provided in this embodiment of this application may be the target test device, the mobile terminal device, or the server in the foregoing embodiments.

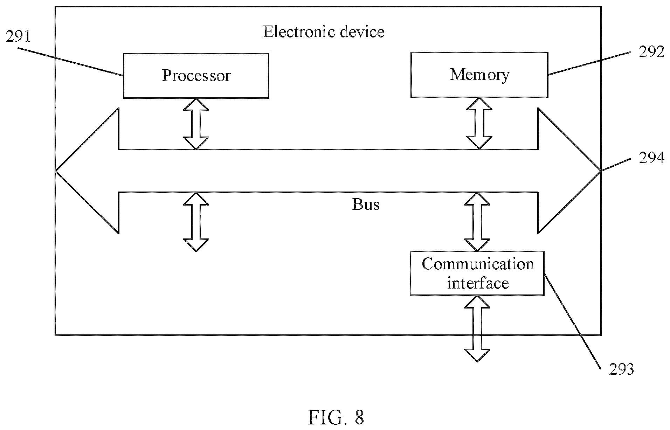

FIG. 8 is a diagram of a structure of an electronic device according to an embodiment of this application. As shown in FIG. 8, the electronic device includes:
a processor (processor) 291, where the electronic device further includes a memory (memory) 292, and may further include a communication interface (Communication Interface) 293 and a bus 294. The processor 291, the memory 292, and the communication interface 293 may communicate with each other through the bus 294. The communication interface 293 may be configured to transmit information. The processor 291 may invoke logical instructions in the memory 292, to perform the method in the foregoing embodiments.
In addition, when the logical instructions in the memory 292 can be implemented in a form of a software functional unit and sold or used as an independent product, the logical instructions may be stored in a computer-readable storage medium.
As a computer-readable storage medium, the memory 292 may be configured to store a software program and a computer-executable program, for example, a program instruction/module corresponding to the method in embodiments of this application. The processor 291 runs the software program, the instructions, and the module that are stored in the memory 292, to perform a function application and data processing, that is, to implement the method in the foregoing method embodiments.

The memory 292 may include a program storage area and a data storage area. The program storage area may store an operating system and an application program required by at least one function. The data storage area may store data created based on use of the terminal device. In addition, the memory 292 may include a high-speed random access memory, and may further include a nonvolatile memory.

This application provides a computer-readable storage medium. The computer-readable storage medium stores computer-executable instructions. When the computer-executable instructions are executed by a processor, the method according to any one of the foregoing embodiments is implemented.

This application provides a computer program product. The computer program product includes a computer program. When the computer program is executed by a processor, the method according to any one of the foregoing embodiments is implemented.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. For example, when computer instructions are used for implementation, the computer instructions provided in embodiments of this application may be located inside the optimizer and the executor in FIG. 1. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state disk, SSD)), or the like.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another place. The storage medium may be any available medium accessible to a general-purpose computer or a special-purpose computer.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A database query method, comprising:

   determining, in response to a query statement, an operator required for executing the query statement, wherein the query statement indicates to obtain to-be-queried data in a database, and the query statement is a statement that needs to be executed in a parallel query manner;
   obtaining available resource information of the operator and a first degree of parallelism of the operator, wherein the first degree of parallelism represents a degree of parallelism that can be currently used when the operator is executed; and obtaining a second degree of parallelism of the operator based on the available resource information of the operator and the first degree of parallelism of the operator, wherein the second degree of parallelism represents a degree of parallelism used when the operator is actually executed; and
   executing the operator based on the second degree of parallelism of the operator, to obtain and return the to-be-queried data.

2. The method according to claim 1, wherein the obtaining a second degree of parallelism of the operator based on the available resource information of the operator and the first degree of parallelism of the operator comprises:
   invoking a preset model if it is determined that the first degree of parallelism of the operator is greater than a preset threshold, and determining the second degree of parallelism of the operator based on the available resource information of the operator, the first degree of parallelism, and the preset model, wherein the preset model indicates a correspondence among the available resource information, the first degree of parallelism, and the second degree of parallelism.

3. The method according to claim 2, wherein the correspondence indicated by the preset model meets the following conditions: the available resource information is in negative correlation with a difference result, and the second degree of parallelism is greater than the preset threshold, wherein the difference result indicates a difference between the first degree of parallelism and the second degree of parallelism.

4. The method according to claim 2 or 3, wherein the method further comprises:
   determining the preset threshold as the second degree of parallelism of the operator if it is determined that the first degree of parallelism is less than or equal to the preset threshold.

5. The method according to any one of claims 1 to 4, wherein the obtaining a first degree of parallelism of the operator comprises:

   obtaining a third degree of parallelism of the query statement, wherein the third degree of parallelism indicates a degree of parallelism that can be used when the query statement is executed; and
   determining a fourth degree of parallelism, wherein the fourth degree of parallelism is an accumulation of second degrees of parallelism of processed operators, and determining, based on the third degree of parallelism and the fourth degree of parallelism, the first degree of parallelism of the operator currently to be processed.

6. The method according to claim 5, wherein the determining a fourth degree of parallelism, and determining, based on the third degree of parallelism and the fourth degree of parallelism, the first degree of parallelism of the operator currently to be processed comprises:

   determining a product of the second degrees of parallelism of the processed operators as the fourth degree of parallelism; and
   determining a quotient of the third degree of parallelism and the fourth degree of parallelism as the first degree of parallelism of the currently to-be-processed operator.

7. The method according to any one of claims 1 to 6, wherein before the determining an operator required for executing the query statement, the method further comprises:

   obtaining status information of the database;
   determining the third degree of parallelism based on the status information of the database, wherein the third degree of parallelism indicates the degree of parallelism that can be used when the query statement is executed; and
   if it is determined that the third degree of parallelism is greater than or equal to a preset value, determining that the query statement is the statement that needs to be executed in the parallel query manner.

8. The method according to claim 7, wherein if the status information of the database comprises a maximum quantity of concurrent connections of the database, a current quantity of concurrent connections of the database, and a current quantity of sessions of the database, the determining the third degree of parallelism based on the status information of the database comprises:

   determining a difference between the maximum quantity of concurrent connections of the database and the current quantity of concurrent connections of the database as a current quantity of available concurrent connections of the database;
   determining a quotient of the current quantity of available concurrent connections of the database and the current quantity of sessions of the database as a to-be-processed degree of parallelism; and
   determining the third degree of parallelism based on the to-be-processed degree of parallelism and a preset fifth degree of parallelism, wherein the fifth degree of parallelism represents a degree of parallelism specified by a user when the query statement is executed.

9. The method according to claim 8, wherein the determining the third degree of parallelism based on the to-be-processed degree of parallelism and a preset fifth degree of parallelism comprises:
   determining a minimum value between the to-be-processed degree of parallelism and the preset fifth degree of parallelism as the third degree of parallelism if it is determined that the preset fifth degree of parallelism exists.

10. The method according to claim 9, wherein the method further comprises:
determining the to-be-processed degree of parallelism as the third degree of parallelism if it is determined that the preset fifth degree of parallelism does not exist.

11. The method according to any one of claims 1 to 10, wherein the obtaining available resource information of the operator comprises:

determining available resource information of the database at a historical moment; and
performing linear interpolation processing based on the available resource information at the historical moment, to determine the available resource information of the operator.

12. The method according to claim 11, wherein the determining available resource information of the database at a historical moment comprises:

obtaining first permission information of the user initiating the query statement, second permission information of the database, and available resource information of a system at the historical moment, wherein the first permission information indicates available resource information for the user to access the database at the historical moment, and the second permission information indicates available resource information allocated to the database at the historical moment; and
determining the available resource information of the database at the historical moment based on the first permission information, the second permission information, and the available resource information of the system at the historical moment.

13. The method according to claim 11 or 12, wherein the obtaining available resource information of the operator comprises:

obtaining third permission information of the user initiating the query statement, fourth permission information of the database, and available resource information of the system at a current moment, wherein the third permission information indicates available resource information for the user to access the database at the current moment, and the fourth permission information indicates available resource information allocated to the database at the current moment; and
determining the available resource information of the operator based on the third permission information, the fourth permission information, and the available resource information of the system at the current moment.

14. The method according to any one of claims 1 to 13, wherein the available resource information comprises one or more of the following information: idle resource information of a central processing unit, remaining information of memory space, and idle resource information of an input/output.

15. The method according to any one of claims 1 to 14, wherein the method further comprises:

obtaining the third degree of parallelism and a total quantity of operators if the available resource information of the operator is not obtained, wherein the third degree of parallelism indicates the degree of parallelism that can be used when the query statement is executed; and
determining the second degree of parallelism of the operator based on the third degree of parallelism and the total quantity of operators.

16. A database query apparatus, comprising:

a first determining unit, configured to determine, in response to a query statement, an operator required for executing the query statement, wherein the query statement indicates to obtain to-be-queried data in a database, and the query statement is a statement that needs to be executed in a parallel query manner;
a first obtaining unit, configured to obtain available resource information of the operator;
a second obtaining unit, configured to obtain a first degree of parallelism of the operator, wherein the first degree of parallelism represents a degree of parallelism that can be currently used when the operator is executed;
a second determining unit, configured to obtain a second degree of parallelism of the operator based on the available resource information of the operator and the first degree of parallelism of the operator, wherein the second degree of parallelism represents a degree of parallelism used when the operator is actually executed; and a third determining unit, configured to execute the operator based on the second degree of parallelism of the operator, to obtain and return the to-be-queried data.

17. The apparatus according to claim 16, wherein the second determining unit comprises:

an invoke module, configured to invoke a preset model if it is determined that the first degree of parallelism of the operator is greater than a preset threshold; and
a first determining module, configured to determine the second degree of parallelism of the operator based on the available resource information of the operator, the first degree of parallelism, and the preset model, wherein the preset model indicates a correspondence among the available resource information, the first degree of parallelism, and the second degree of parallelism.

18. The apparatus according to claim 17, wherein the correspondence indicated by the preset model meets the following conditions: the available resource information is in negative correlation with a difference result, and the second degree of parallelism is greater than the preset threshold, wherein the difference result indicates a difference between the first degree of parallelism and the second degree of parallelism.

19. The apparatus according to claim 17 or 18, wherein the apparatus further comprises:
a second determining module, configured to determine the preset threshold as the second degree of parallelism of the operator if it is determined that the first degree of parallelism is less than or equal to the preset threshold.

20. The apparatus according to any one of claims 16 to 19, wherein the second obtaining unit comprises:

a first obtaining module, configured to obtain a third degree of parallelism of the query statement, wherein the third degree of parallelism indicates a degree of parallelism that can be used when the query statement is executed; and
a third determining module, configured to: determine a fourth degree of parallelism, wherein the fourth degree of parallelism is an accumulation of second degrees of parallelism of processed operators, and determine, based on the third degree of parallelism and the fourth degree of parallelism, the first degree of parallelism of the operator currently to be processed.

21. The apparatus according to claim 20, wherein the third determining module is specifically configured to:

determine a product of the second degrees of parallelism of the processed operators as the fourth degree of parallelism; and
determine a quotient of the third degree of parallelism and the fourth degree of parallelism as the first degree of parallelism of the currently to-be-processed operator.

22. The apparatus according to any one of claims 16 to 21, wherein the apparatus further comprises:

a third obtaining unit, configured to obtain status information of the database before the first determining unit determines the operator required for executing the query statement;
a fourth determining unit, configured to determine the third degree of parallelism based on the status information of the database, wherein the third degree of parallelism indicates the degree of parallelism that can be used when the query statement is executed; and
a fifth determining unit, configured to: if it is determined that the third degree of parallelism is greater than or equal to a preset value, determine that the query statement is the statement that needs to be executed in the parallel query manner.

23. The apparatus according to claim 22, wherein if the status information of the database comprises a maximum quantity of concurrent connections of the database, a current quantity of concurrent connections of the database, and a current quantity of sessions of the database, the fourth determining unit comprises:

a fourth determining module, configured to determine a difference between the maximum quantity of concurrent connections of the database and the current quantity of concurrent connections of the database as a current quantity of available concurrent connections of the database;
a fifth determining module, configured to determine a quotient of the current quantity of available concurrent connections of the database and the current quantity of sessions of the database as a to-be-processed degree of parallelism; and

a sixth determining module, configured to determine the third degree of parallelism based on the to-be-processed degree of parallelism and a preset fifth degree of parallelism, wherein the fifth degree of parallelism represents a degree of parallelism specified by a user when the query statement is executed.

24. The apparatus according to claim 23, wherein the sixth determining module is specifically configured to:
determine a minimum value between the to-be-processed degree of parallelism and the preset fifth degree of parallelism as the third degree of parallelism if it is determined that the preset fifth degree of parallelism exists.

25. The apparatus according to claim 24, wherein the apparatus further comprises:
a seventh determining module, configured to determine the to-be-processed degree of parallelism as the third degree of parallelism if it is determined that the preset fifth degree of parallelism does not exist.

26. The apparatus according to any one of claims 16 to 25, wherein the first obtaining unit comprises:

an eighth determining module, configured to determine available resource information of the database at a historical moment; and

a ninth determining module, configured to perform linear interpolation processing based on the available resource information at the historical moment, to determine the available resource information of the operator.

27. The apparatus according to claim 26, wherein the eighth determining module is specifically configured to:

obtain first permission information of the user initiating the query statement, second permission information of the database, and available resource information of a system at the historical moment, wherein the first permission information indicates available resource information for the user to access the database at the historical moment, and the second permission information indicates available resource information allocated to the database at the historical moment; and

determine the available resource information of the database at the historical moment based on the first permission information, the second permission information, and the available resource information of the system at the historical moment.

28. The apparatus according to claim 26 or 27, wherein the first obtaining unit comprises:

a second obtaining module, configured to obtain third permission information of the user initiating the query statement, fourth permission information of the database, and available resource information of the system at a current moment, wherein the third permission information indicates available resource information for the user to access the database at the current moment, and the fourth permission information indicates available resource information allocated to the database at the current moment; and

a tenth determining module, configured to determine the available resource information of the operator based on the third permission information, the fourth permission information, and the available resource information of the system at the current moment.

29. The apparatus according to any one of claims 16 to 28, wherein the available resource information comprises one or more of the following information: idle resource information of a central processing unit, remaining information of memory space, and idle resource information of an input/output.

30. The apparatus according to any one of claims 16 to 29, wherein the apparatus further comprises:

a fourth obtaining unit, configured to obtain the third degree of parallelism and a total quantity of operators if the available resource information of the operator is not obtained, wherein the third degree of parallelism indicates the degree of parallelism that can be used when the query statement is executed; and

a sixth determining unit, configured to determine the second degree of parallelism of the operator based on the third degree of parallelism and the total quantity of operators.

31. An electronic device, comprising: a processor, and a memory that is in a communication connection to the processor, wherein

the memory stores computer-executable instructions; and
the processor executes the computer-executable instructions stored in the memory, to implement the method according to any one of claims 1 to 15.

32. A computer-readable storage medium, wherein the computer-readable storage medium stores computer-executable instructions, and when the computer-executable instructions are executed by a processor, the method according to any one of claims 1 to 15 is implemented.

33. A computer program product, comprising a computer program, wherein when the computer program is executed by a processor, the method according to any one of claims 1 to 15 is implemented.

FIG. 1

| | |
|---|---|
| Determine, in response to a query statement, an operator required for executing the query statement, where the query statement indicates to obtain to-be-queried data in a database, and the query statement is a statement that needs to be executed in a parallel query manner | S201 |
| Obtain available resource information of the operator | S202 |
| Obtain a first degree of parallelism of the operator, where the first degree of parallelism represents a degree of parallelism that can be currently used when the operator is executed | S203 |
| Obtain a second degree of parallelism of the operator based on the available resource information of the operator and the first degree of parallelism of the operator, where the second degree of parallelism represents a degree of parallelism used when the operator is actually executed | S204 |
| Execute the operator based on the second degree of parallelism of the operator, to obtain and return the to-be-queried data | S205 |

FIG. 2

Determine, in response to a query statement, an operator required for executing the query statement, where the query statement indicates to obtain to-be-queried data in a database, and the query statement is a statement that needs to be executed in a parallel query manner — S301

Obtain available resource information of the operator — S302

Obtain a first degree of parallelism of the operator, where the first degree of parallelism represents a degree of parallelism that can be currently used when the operator is executed — S303

Determine whether the first degree of parallelism is greater than a preset threshold — S304

Invoke a preset model if it is determined that the first degree of parallelism of the operator is greater than the preset threshold, where the preset model indicates a correspondence among the available resource information, the first degree of parallelism, and a second degree of parallelism — S305

Determine the preset threshold as a second degree of parallelism of the operator if it is determined that the first degree of parallelism is less than or equal to the preset threshold — S307

Determine the second degree of parallelism of the operator based on the available resource information of the operator, the first degree of parallelism, and the preset model, where the second degree of parallelism represents a degree of parallelism used when the operator is actually executed — S306

Execute the operator based on the second degree of parallelism of the operator, to obtain and return the to-be-queried data — S308

FIG. 3

Obtain status information of a database in response to a query statement, where the query statement indicates to obtain to-be-queried data in the database
S401

Determine a third degree of parallelism based on the status information of the database, where the third degree of parallelism indicates a degree of parallelism that can be used when the query statement is executed
S402

If it is determined that the third degree of parallelism is greater than or equal to a preset value, determine that the query statement is a statement that needs to be executed in a parallel query manner
S403

Determine an operator required for executing the query statement
S404

Obtain available resource information of the operator
S405

Obtain the third degree of parallelism of the query statement, where the third degree of parallelism indicates a degree of parallelism that can be used when the query statement is executed
S406

Determine a fourth degree of parallelism, and determine a first degree of parallelism of a currently to-be-processed operator based on the third degree of parallelism and the fourth degree of parallelism, where the first degree of parallelism represents a degree of parallelism that can be currently used when the operator is executed
S407

Obtain a second degree of parallelism of the operator based on the available resource information of the operator and the first degree of parallelism of the operator, where the second degree of parallelism represents a degree of parallelism used when the operator is actually executed
S408

Execute the operator based on the second degree of parallelism of the operator, to obtain and return the to-be-queried data
S409

FIG. 4

Determine, in response to a query statement, an operator required for executing the query statement, where the query statement indicates to obtain to-be-queried data in a database, and the query statement is a statement that needs to be executed in a parallel query manner — S501

Determine available resource information of the database at a historical moment — S502

Obtain a third degree of parallelism and a total quantity of operators if available resource information of the operator is not obtained, where the third degree of parallelism indicates a degree of parallelism that can be used when the query statement is executed — S506

Perform linear interpolation processing based on the available resource information at the historical moment, to determine available resource information of the operator — S503

Determine a second degree of parallelism of the operator based on the third degree of parallelism and the total quantity of operators — S507

Obtain a first degree of parallelism of the operator — S504

Obtain a second degree of parallelism of the operator based on the available resource information of the operator and the first degree of parallelism of the operator — S505

Execute the operator based on the second degree of parallelism of the operator, to obtain and return the to-be-queried data — S508

FIG. 5

601 602 603 604 605

| First determining unit | First obtaining unit | Second obtaining unit | Second determining unit | Third determining unit |

Database query apparatus

FIG. 6

607

6071

Fourth
determining
module

6072

Fifth
determining
module

6073

Sixth
determining
module

6074

Seventh
determining
module

Fourth determining unit

606

Third obtaining unit

608

Fifth determining
unit

601

First determining unit

609

Fourth obtaining unit

610

Sixth determining
unit

605

Third determining
unit

602

6021

Eighth
determining
module

6022

Ninth
determining
module

First obtaining unit

603

6031

First
obtaining
module

6032

Third
determining
module

Second obtaining unit

604

6041

Invoke
module

6042

First
determining
module

6043

Second
determining
module

Second
determining unit

Database query apparatus

FIG. 7

Electronic device

291

Processor

Memory

292

294

Bus

Communication
interface

293

FIG. 8

## INTERNATIONAL SEARCH REPORT

| | International application No. |
|---|---|
| | **PCT/CN2023/107575** |

### A. CLASSIFICATION OF SUBJECT MATTER

G06F 16/2453(2019.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 数据库, 查询, 并行, 线程, 进程, 并行度, 资源, 可用, 子计划, 算子, 调度, 调整, 动态, database, query, parallel, thread, process, parallelism, resource, available, plan, operator, schedule, adjust, dynamic

### C. DOCUMENTS CONSIDERED TO BE RELEVANT

| Category* | Citation of document, with indication, where appropriate, of the relevant passages | Relevant to claim No. |
|---|---|---|
| X | CN 112035523 A (SHANGHAI DAMENG DATABASE CO., LTD.) 04 December 2020 (2020-12-04)<br>  description, paragraphs [0030]-[0103] | 1-33 |
| A | US 2012005188 A1 (ORACLE INTERNATIONAL CORP.) 05 January 2012 (2012-01-05)<br>  entire document | 1-33 |
| A | CN 109885384 A (PINGAN YIQIANBAO E-COMMERCE CO., LTD.) 14 June 2019 (2019-06-14)<br>  entire document | 1-33 |
| A | CN 109558232 A (TRANSWARP TECHNOLOGY (SHANGHAI) CO., LTD.) 02 April 2019 (2019-04-02)<br>  entire document | 1-33 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 September 2023** | **14 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/107575**

| Patent document cited in search report | | | Publication date (day/month/year) | Patent family member(s) | Publication date (day/month/year) |
|---|---|---|---|---|---|
| CN | 112035523 | A | 04 December 2020 | None | |
| US | 2012005188 | A1 | 05 January 2012 | None | |
| CN | 109885384 | A | 14 June 2019 | None | |
| CN | 109558232 | A | 02 April 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211262184X